# EUROPÄISCHE PATENTSCHRIFT

(11) **EP 2 272 789 B1**
(45) Veröffentlichungstag und Bekanntmachung des Hinweises auf die Patenterteilung: **11.11.2015**
(21) Anmeldenummer: 10007005.1
(22) Anmeldetag: 07.07.2010
(51) Int. Cl.: B66F 9/20, G05G 1/62, G05G 9/047, B60N 2/46

(54) **Bedienvorrichtung und Bedienvorrichtungssystem für Flurförderzeug**
Control device and control device system for industrial truck
Dispositif de commande et système de dispositif de commande pour un chariot de manutention

(30) Priorität: 09.07.2009 DE 102009032493
(43) Veröffentlichungstag der Anmeldung: 12.01.2011
(73) Patentinhaber: Linde Material Handling GmbH, 63743 Aschaffenburg (DE)
(72) Erfinder: Hanke, Mark, 63739 Aschaffenburg (DE); Will, Harald, 63743 Aschaffenburg (DE); Messerschmidt, Martin, 63843 Niedernberg (DE)
(74) Vertreter: Geirhos, Johann

(56) Entgegenhaltungen:
- EP-A1- 1 205 429
- EP-A1- 1 353 257
- EP-A1- 1 748 026
- EP-A2- 1 350 668
- EP-A2- 1 747 964
- DE-A1- 4 408 777
- DE-A1- 19 548 950
- DE-A1-102005 023 890
- DE-A1-102005 049 098
- US-A1- 2003 230 447

## Beschreibung

Die vorliegende Erfindung betrifft eine Bedienvorrichtung für ein Flurförderzeug mit einer Mehrzahl an einer Bedienkonsole, insbesondere einer Armlehne, angeordneten Bedienelemente, die auf einer Fläche angeordnet sind.
Es ist bekannt, dass Flurförderzeuge an ihren Bedienplätzen Bedienkonsolen aufweisen, an denen eines oder mehrere Bedienelemente angeordnet sind und auf die ein Fahrer in stehender oder sitzender Haltung zur Steuerung von Funktionen des Flurförderzeugs mit einer oder beiden Händen zugreifen kann.

Beispielsweise haben Regalbediengeräte an der Brüstung des Fahrerstands eine Bedienkonsole, vor der der Fahrer steht. Schubmaststapler, insbesondere Schmalgangstapler, weisen eine seitliche Armauflage als Bedienkonsole auf.

Es ist weiter bekannt, bei Flurförderzeugen, die als Gegengewichtsgabelstapler ausgebildet sind und die von einem Fahrer auf einem Fahrersitz bedient werden, dass sich Bedienelemente für unterschiedliche Funktionalitäten des Flurförderzeuges in der Armlehne angeordnet befinden. Die Bedienelemente dienen dabei in der Regel bei einem Flurförderzeug zur Bedienung der Lasthandhabungsfunktionen, wie Heben und Senken eines Lastaufnahmemittels, Neigen eines Hubmastes, an dem das Lastaufnahmemittel anhebbar und absenkbar geführt ist, seitliches Verschieben des Lastaufnahmemittels und ggf. weiterer hydraulischer Zusatzfunktionen, soweit diese vorhanden sind. Die Bedienelemente können auch einen Fahrtrichtungsschalter des Flurförderzeuges umfassen, mit dem ein Fahrantrieb zwischen Vorwärts- und Rückwärtsfahrt umgeschaltet werden kann. Auch ist denkbar, sogar für die Fahrfunktionen selbst, das Beschleunigen bzw. Abbremsen, ein Bedienelement insbesondere für ein Rangierbetrieb oder Kriechbetrieb, vorzusehen.

Dabei sind bei bekannten Ausführungen nach dem Stand der Technik in der Armlehne die Bedienelemente an vorgegebenen Montagepositionen angeordnet. Die Art der Bedienelemente kann durch die Montage unterschiedlicher Bedienelemente verändert werden, etwa indem als Bedienelement ein Zentralhebel, ein Kreuzhebel, ein Einzelhebel oder Doppelhebel im Sinne eines Joysticks ausgewählt werden.

Dabei ist jedoch der Abstand der Bedienhebel dieser Bedienelemente untereinander durch die Montageposition in der Armlehne fest vorgegeben.

Nachteilig an diesem Stand der Technik ist daher, dass bei einer Veränderung des Bedienelements die jeweils von der Art des Bedienelements abhängigen Platzerfordernisse zur Ermöglichung einer optimalen Bedienung oft nicht berücksichtigt werden können. Beispielsweise bestehen unterschiedliche Platzanforderungen seitlich des Bedienelements, wenn ein Joystick nur in einer Ebene vorwärts/rückwärts bewegt werden kann oder als Kreuzhebel in zwei Ebenen auch eine Beweglichkeit rechts/links ermöglicht und daher einen entsprechenden Freiraum seitlich des Bedienelements erfordert, um diese Bewegung durchführen zu können.

Auch ist die Anzahl der Bedienelemente durch die üblichen Breiten der Armlehnen begrenzt. So sind beispielsweise bei derzeitig eingesetzten Armlehnen normalerweise sechs nebeneinander angeordnete Bedienelemente nicht möglich.

Aus der EP 1 350 668 A2 ist ein Flurförderzeug mit einer Armlehne und einer Mehrzahl von Bedienelementen bekannt. Die Bedienelemente sind im vorderen Bereich der Armlehne angeordnet und entlang eines Arbeitsbereichs einer Hand eines Bedieners auf einer Kreisbahn in einer solchen Art angeordnet, dass der Arm des Bedieners während des Betätigens auf die Armlehne gelegt sein kann.

Nachteilig an diesem bekannten Stand der Technik ist, dass er keine Lösung für die bereits oben genannten Probleme anbietet. Auch bietet dieser Stand der Technik keine Lösung für das Problem an, die Bedienelemente auf einer Armlehne auf einfache und kostengünstige Weise an veränderte Gegebenheiten eines Flurförderzeugs bzw. ein neues Flurförderzeug anzupassen. Es wird keine Lösung dafür geboten, eine möglichst große Anzahl von Bedienelementen auf einem beschränkten Platz einer Armlehne bzw. im vorderen, als Armlehnenkopf bezeichneten Bereich einer Armlehne so anzuordnen, dass diese dennoch optimal zu erreichen und zu bedienen sind.

Aus der DE 10 2005 023 890 A1 ist eine Bedienvorrichtung für ein Flurförderzeug nach dem Oberbegriff des Patentanspruchs 1 bekannt.

Es ist daher Aufgabe der vorliegenden Erfindung, eine Bedienvorrichtung für ein Flurförderzeug zur Verfügung zu stellen, bei dem Bedienelemente vorteilhaft, insbesondere eine möglichst große Anzahl von Bedienelementen, auf einer Bedienkonsole angeordnet werden können und gleichzeitig eine ergonomisch günstige Bedienbarkeit sichergestellt werden kann.

Diese Aufgabe wird durch eine Bedienvorrichtung mit den Merkmalen des unabhängigen Anspruchs 1 gelöst. Vorteilhafte Weiterbildungen werden in den Unteransprüchen angegeben.

Die Aufgabe wird durch eine Bedienvorrichtung für ein Flurförderzeug mit einer Mehrzahl an einer Bedienkonsole, insbesondere einer Armlehne, angeordneten Bedienelementen gelöst, die auf einer Fläche angeordnet sind, wobei die Bedienelemente auf einer konvexen oder annähernd zumindest zylinderförmig nach oben gewölbten Fläche angeordnet sind, wobei die Fläche mit einem Radius r_{F} von einer unterhalb der Bedienkonsole und in Längserstreckung der Bedienkonsole gelegenen Parallelachse aus gewölbt ist.

Vorteilhaft ist es dadurch möglich, wenn mehrere Bedienelemente angeordnet werden, im gleichen Bauraum gegenüber den Bedienkonsolen nach dem Stand der Technik eine größere Anzahl von Bedienelementen zu integrieren. Insbesondere ist es auch möglich, bis zu sechs Bedienelemente zu integrieren. Durch die Nachobenwölbung wird der Abstand der einzelnen Bedienelemente untereinander mit zunehmendem Abstand von der Fläche auf der Bedienkonsole nach oben umso größer. Dadurch steht gerade in dem Bereich, in dem die Bedienelemente durch die Hand eines Bedieners ergriffen werden, ein größerer seitlicher Abstand zur Verfügung, um die Bedienelemente zuverlässig ohne Fehlbedienung benachbarter Bedienelemente zu ergreifen und um Funktionalitäten wie seitliches Verschwenken bei einem Kreuzhebel als Joystick zu ermöglichen.

In einer vorteilhaften Ausführungsform ist die Fläche kugelförmig, wobei sie mit einem Radius r_{F} von einem Punkt auf der Parallelachse gewölbt ist.

Durch die Anordnung auf einer Kugelfläche steht eine maximale Fläche zur Verfügung, auf der Bedienelemente angeordnet werden können und ist gleichzeitig durch die Kugelform eine gleichmäßige Vergrößerung des seitlichen Abstands zwischen den Bedienelementen in alle Richtungen mit zunehmendem Abstand von der Kugelfläche gegeben. Es ist daher auch denkbar, dass bei Bedienelementen, die einen größeren Bewegungsraum erfordern, diese bewusst mit einem größeren Abstand eines Greifbereiches zu dieser Kugelfläche gestaltet werden.

In einer günstigen Ausführungsform sind die Bedienelemente auf der Fläche in einer Linie mit einem Greifradius r_{G} angeordnet, der auf einen Aufliegepunkt eines Ellenbogengelenks eines Bedieners auf der Bedienkonsole bezogen ist.

Damit entspricht der Greifradius im Wesentlichen der Unterarmlänge des Bedieners und dieser kann die Bedienelemente durch einfaches Drehen des Unterarmes gut erreichen, ohne dass er an der Auflageposition des Ellenbogens selbst auf der Bedienkonsole etwas ändern muss. Da die Bedienelemente zugleich auf der mit einem Radius nach oben gewölbten Zylinder- bzw. Kugelfläche liegen und in der Schnittlinie zwischen diesem Greifradius und der Zylinder- bzw. Kugelfläche angeordnet sind, ist bei optimierter Erreichbarkeit und Bedienbarkeit zugleich sichergestellt, dass eine maximale Anzahl von Bedienelementen angeordnet werden kann. Dabei ist es auch denkbar, dass die Bedienelemente mit ihrer Betätigungsrichtung radial auf den Auflagepunkt des Ellenbogens ausgerichtet werden. In letzterem Fall ist dann, soweit eine Betätigungsrichtung des Bedienelements in Längsrichtung vorgesehen ist, diese Betätigungsrichtung stets auf den Arm und die Bewegungsmöglichkeit der Finger der Hand, bzw. des Handgelenks in Armlängsrichtung ausgerichtet. Alternativ oder ergänzend ist auch eine tangentiale Ausrichtung der Betätigungsrichtung möglich.

Soweit die Fläche als Kugelfläche ausgeformt ist, ergibt sich bei einer Anordnung in einer Schnittlinie mit dem Greifradius der besondere Vorteil, dass keine nach oben abknickende Handhaltung erforderlich ist, sondern über den Abfall der Kugelfläche nach vorne hin stets auf der Linie des Greifradius eine günstige Handhaltung erreicht werden kann, bei der zugleich eine maximale Anzahl von Bedienelementen in dieser günstigen Position angeordnet werden kann.

Vorteilhaft ist zumindest eines der Bedienelemente ein um eine oder zwei Achsen verschwenkbarer Bedienhebel, insbesondere ein Joystick.

Vor allem ein Joystick, der auch eine seitliche Bewegungs- und Steuerrichtung aufweist und somit in der Ausführungsform eines um zwei Achsen verschwenkbaren Bedienhebels vorliegt, kann entsprechend der Erfindung besonders vorteilhaft angeordnet werden und mit optimaler Ausnutzung des Bauraums eingesetzt werden.

Vorteilhaft ist zumindest eines der Bedienelemente der Bedienvorrichtung ein Bedienhebel, insbesondere ein Joystick, der um eine oder zwei Achsen verschwenkbar ist. Dabei kann einer der Bedienhebel ein Doppelbedienhebel sein.

Insbesondere sind dabei auch Ausführungen solcher Bedienelemente als Minihebel möglich. Minihebel sind in der Regel um eine Achse verschwenkbar.

Zumindest eines der Bedienelemente kann ein Tasten- und/oder Schalterfeld sein.

Es ist auch möglich, als Bedienelemente Schalter, Druckschalter, Wippschalter, Tastschalter oder einen Notausknopf vorzusehen.

In vorteilhafter Ausführungsform ist zumindest eines der Bedienelemente ein Drehgeber oder Drehrücksteller.

Ein solcher Drehgeber kann insbesondere als Lenkknopf zur Fahrzeuglenkung dienen.

Als Bedienelement können auch ein Display oder andere Anzeigevorrichtungen vorgesehen werden.

Vorteilhaft ist die Bedienkonsole eine Armlehne.

In vorteilhafter Ausführungsform ist die Fläche, auf der die Bedienelemente angeordnet sind, an einem Armlehnenkopf der Armlehne angeordnet.

Die Bedienelemente können in der Fläche F liegende Anschlussränder und/oder Übergangsflächen aufweisen.

Soweit auch die Anschlussflächen bzw. die randseitigen Übergänge der Bedienelemente zu der Fläche die entsprechende Wölbung der Zylinder- bzw. Kugelfläche aufweisen bzw. in der Fläche liegen, ist eine große Freiheit in der Positionierung und Anordnung der Bedienelemente auf dieser Fläche gegeben. Vorteilhaft sind Abstandselemente zwischen und/oder randseitig zu den Bedienelementen angeordnet.

Die Aufgabe wird auch durch ein System aus einer Mehrzahl von zuvor beschriebenen Bedienvorrichtungen für unterschiedliche Flurförderzeuge mit jeweils angepassten Bedienelementen gelöst, bei dem die Bedienelemente einheitliche Befestigungselemente zum Einsetzen in entsprechende Aufnahmeelemente der Bedienvorrichtung aufweisen, und die Bedienvorrichtungen eine linienförmige, insbesondere bogenförmige, Aufnahmeöffnung aufweisen, in die zur Bildung einer an ein bestimmtes Flurförderzeug angepassten Bedienvorrichtung aus der Mehrzahl der Bedienelemente ausgewählte Bedienelemente einsetzbar sind. Die Bedienvorrichtungen des Systems können solche mit den obig beschriebenen Merkmalen in Bezug auf die Anordnung auf einer Zylinderfläche, Kugelfläche sowie in einer Schnittlinie mit einem Greifradius r_{G} sein.

Dadurch kann eine freie Kombination von Bedienelementen ausgewählt werden, bei denen die einzelnen Bedienelemente jeweils angepasst an die zugehörige Funktion, beispielsweise des Hebens oder Senkens eines Lastaufnahmemittels an einem Hubmast eines Gabelstaplers, oder eines Seitenschieber, oder eines Neigeantriebs sowie sonstiger hydraulischer Zusatzverbraucher erfolgen kann. Dabei können gleiche Bedienelemente mehrfach eingesetzt werden oder völlig unterschiedliche zum Einsatz kommen. Insbesondere ist es auch möglich, entweder nach besonderen Vorlieben eines bestimmten Marktes Bedienelemente mit geringem finanziellem Aufwand oder auch im Einzelfall kundenspezifisch anzupassen. Durch die linienförmige, insbesondere kreisbogenförmige Aufnahmeöffnung, die beispielsweise wie zuvor bereits beschrieben angeordnet sein kann, folglich auf einer Zylinderfläche oder einer Kugelfläche sowie auf dem Greifradius, ist dabei eine gute Bedienbarkeit und Erreichbarkeit durch einen Fahrer gewährleistet. Somit kann mit im Vergleich zum Stand der Technik sehr geringem finanziellen Aufwand durch Auswahl von Bedienelementen mit einheitlichen Befestigungselementen eine jeweils angepasste Bedienvorrichtung für unterschiedliche Flurförderzeuge erstellt werden.

In günstiger Ausführungsform können in Zwischenräume zwischen den Bedienelementen und/oder seitliche Freiräume in der Aufnahmeöffnung Abstandselemente angeordnet werden.

Vorteilhaft können die Abstandselemente unterschiedliche Breiten haben.

Mit Abstandselementen, die gleiche oder unterschiedliche Breite haben, wird es möglich, durch die zwischen den Bedienelementen angeordneten Abstandselemente auch den für das einzelne Bedienelement zur Verfügung stehenden Raum zur Betätigung individuell zu gestalten und auf einfache und kostengünstige Weise anzupassen. Auch hier kann vorteilhaft eine Anpassung spezifisch an Märkte oder an einzelne Kunden erfolgen. Durch die Abstandselemente kann auch eine freie Anordnung insoweit erfolgen, als weniger Bedienelemente als möglich angeordnet werden und Zwischenräume abgedeckt werden. Des Weiteren dienen die Abstandselemente auch zur optischen Gestaltung.

Es kann auch zwischen zwei Bedienelementen jeweils ein Abstandselement angeordnet werden. Dadurch ist es möglich, die Bedienelemente in größerem Maß zu vereinheitlichen, da der seitliche Abstand dann allein durch die Abstandselemente bewirkt wird.

In vorteilhafter Ausführungsform haben die Bedienelemente unterschiedliche Breiten.

Für eine platzökonomische Anordnung ist es vorteilhaft, bei den Bedienelementen von vornherein zu berücksichtigen, ob diese einen geringen seitlichen Bewegungsraum benötigen, wie etwa ein Hebel, der als Joystick nur in einer Ebene nach vorne und hinten verschwenkt werden kann, oder einen größeren seitlichen Bewegungsraum wie ein in zwei Ebenen schwenkbarer Bedienhebel, der als Joystick auch seitlich verschwenkt werden kann.

Zumindest eines der Bedienelemente kann bei dem System ein um eine oder zwei Achsen verschwenkbarer Bedienhebel sein, insbesondere ein Joystick. Der Bedienhebel kann ein Doppelbedienhebel sein.

Insbesondere sind dabei auch Ausführungen solcher Bedienelemente als Minihebel möglich.

In vorteilhafter Ausführungsform ist zumindest eines der Bedienelemente bei dem System ein Tasten- und/oder Schalterfeld.

Es ist auch möglich, als Bedienelemente Schalter, Druckschalter, Wippschalter, Tastschalter oder einen Notausknopf vorzusehen.

Zumindest eines der Bedienelemente kann bei dem System ein Drehgeber oder ein Drehrücksteller sein.

Ein solcher Drehgeber kann insbesondere als Lenkknopf zur Fahrzeuglenkung dienen.

Als Bedienelement können auch ein Display oder andere Anzeigevorrichtungen vorgesehen werden.

Vorteilhaft ist die Aufnahmeöffnung auf einer Fläche, insbesondere einer zylinder- oder kugelförmigen Fläche einer Bedienkonsole angeordnet.

In günstiger Ausführungsform ist die Bedienkonsole eine Armlehne und die Fläche an einem Armlehnenkopf der Armlehne angeordnet.

Bei dem zuvor beschriebenen System können die Bedienvorrichtungen für unterschiedliche Flurförderzeuge eines oder mehrere Bedienelemente gemeinsam haben.

Durch eine solche möglichst weitgehende Übereinstimmung kann erreicht werden, dass bei einem Wechsel eines Flurförderzeuges keine Umstellung erforderlich ist und Zeiten für Einweisungen für den Fahrer verringert werden können.

Vorteilhafte Ausführungsbeispiele der erfindungsgemäßen Bedienvorrichtungen sowie des erfindungsgemäßen Systems werden anhand der nachfolgenden Zeichnungen erläutert, in denen
- Fig. 1: ein Flurförderzeug mit einer erfindungsgemäßen Bedienvorrichtung,
- Fig. 2: die erfindungsgemäße Bedienvorrichtung der Fig. 1,
- Fig. 3a: eine erste zu einem erfindungsgemäßen System gehörende Bedienvorrichtung, und
- Fig. 3b: eine zweite zu dem erfindungsgemäßen System gehörende Bedienvorrichtung zeigt.

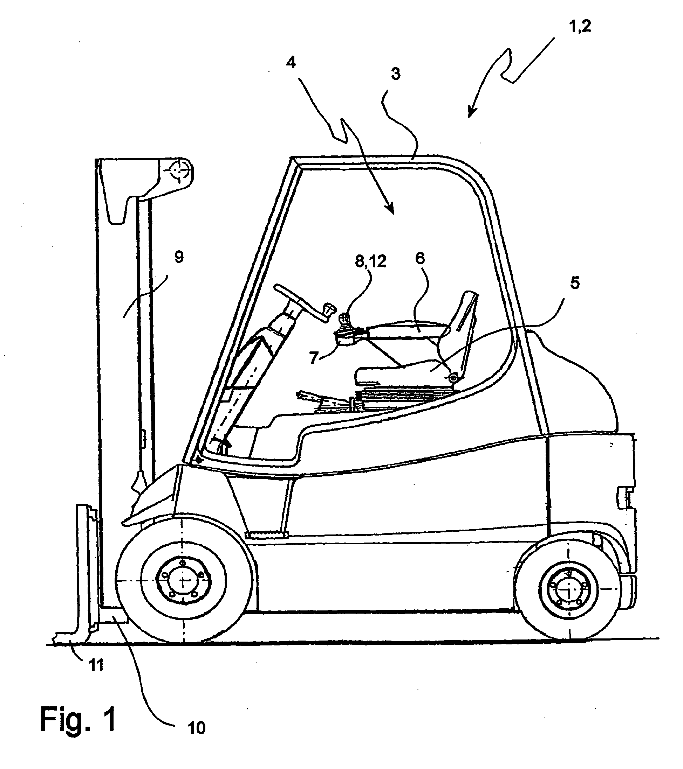

Die Fig. 1 zeigt ein als Gegengewichtsstapler 1 ausgebildetes Flurförderzeug 2 als Beispiel eines gattungsgemäßen Flurförderzeugs 2, bei dem eine erfindungsgemäße Bedienvorrichtung zum Einsatz kommt. Innerhalb eines Fahrerschutzdaches 3 ist ein Arbeitsplatz 4 für eine Bedienperson angeordnet. Der Arbeitsplatz 4 umfasst einen Fahrersitz 5 mit einer am Fahrersitz 5 angeordneten als Armlehne ausgebildete Bedienkonsole 6. An der Bedienkonsole 6 sind im vorderen Bereich, dem Armlehnenkopf 7, mehrere Bedienelemente 8 vorgesehen, hier beispielsweise als Joysticks 12 ausgebildet. Mit Hilfe der Bedienelemente 8 ist die Arbeitshydraulik des Gabelstaplers 2 betätigbar, die einen Hubantrieb zum Anheben und Absenken eines an einen Hubmast 9 angeordneten als Hubschlitten ausgebildeten Lastaufnahmemittels 10, einen Neigeantrieb zum Neigen des Hubmasts 9 und einen oder mehrere Zusatzverbraucher umfasst, beispielsweise einen Seitenschieber, mittels dem eine an dem Lastaufnahmemittel 10 angeordnete Lastgabel 11 in seitlicher Richtung verstellbar sind.

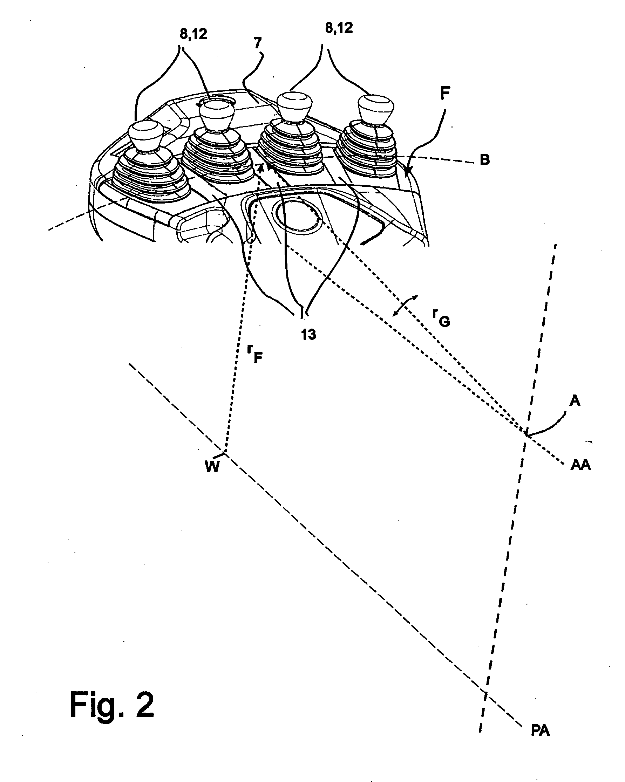

Die Fig. 2 zeigt ein erfindungsgemäßes Ausführungsbeispiel einer Bedienvorrichtung. An dem Armlehnenkopf 7 sind die Bedienelemente 8, hier in Form von Joysticks 12 angeordnet. Dabei sind die Bedienelemente 8 auf einer Fläche F angeordnet. Diese Fläche ist eine Teilfläche einer Kugel mit einem Radius r_{F}, der sich auf einen Punkt W unterhalb des Armlehnenkopfs 7 auf einer Parallelachse PA zu einer Armlehnenachse AA der hier nicht dargestellten Armlehne stützt. Dabei sind die Bedienelemente 8 auf der Kugelfläche in einem Kreisbogen angeordnet, der der Schnitt- oder Bogenlinie B zwischen der Kugelfläche F mit dem Radius r_{F} und einer zweiten Kugelfläche mit dem Radius r_{G}, einem Greifradius, entspricht. Dieser Greifradius r_{G} stützt sich auf einen in der Fig. 2 mit A bezeichneten Stützpunkt, der dem Aufliegepunkt des Ellenbogens eines Fahrers auf der Armlehne entspricht, und der Greifradius r_{G} entspricht somit der Unterarmlänge des Fahrers. Die Bedienelemente 8 sind dabei in dieser Bogenlinie B in einer Aufnahmeöffnung angeordnet, wobei jeweils zwischen den Bedienelementen 8 und randseitig zu den außen liegenden Bedienelementen 8 Abstandselemente 13 angeordnet sind. Ränder und Übergangsflächen der Bedienelemente 8 und der Abstandselemente 13 liegen dabei in der Kugelfläche F. In dem vorliegenden Beispiel besteht die Bedienvorrichtung daher aus vier gleichen Joysticks 12 und diese Joysticks 12 sind durch gleichbreite Abstandselemente 13 voneinander getrennt.

Vorteilhaft sind die Platzverhältnisse um die Bedienelemente 8, hier in Form der Joysticks 12, optimiert. Mit zunehmendem Abstand von der Fläche F nach oben vergrößert sich der Bewegungsraum und die Joysticks 12 können, ohne dass aus Versehen der jeweils benachbarte Joystick 12 betätigt wird, bedient werden. Da die Anschlussflächen der Bedienelemente 8 zu den jeweils anliegenden Abstandselementen 13 und die Abstandselemente 13 selbst ebenfalls die Wölbung der Kugelfläche F mit dem Radius r_{F} aufweisen, können die Bedienelemente 8 sowie die Abstandselemente 13 und ggf. weitere Abstandselemente und Bedienelemente in der Aufnahmeöffnung frei wählbar miteinander kombiniert und angeordnet werden und es ergibt sich stets eine durchgehende gewünschte Fläche F, auf der die Bedienelemente 8 angeordnet sind. In dem vorliegenden Beispiel sind die Bedienelemente 8 in der Bogenlinie B so mit dem Radius r_{G} angeordnet, dass von dem Stützpunkt A des Radius r_{G} sich ein leicht aufwärtsgerichteter Winkel für den Unterarm eines Fahrers ergibt.

Es ist jedoch alternativ auch denkbar, dass die Bogenlinie B auf der Kugelfläche F weiter vorne am Armlehnenkopf 7 so angeordnet wird, dass kein oder nur ein geringer Winkel auftritt und eine leicht abfallende Handhaltung beim Ergreifen der Bedienelemente 8 möglich wird.

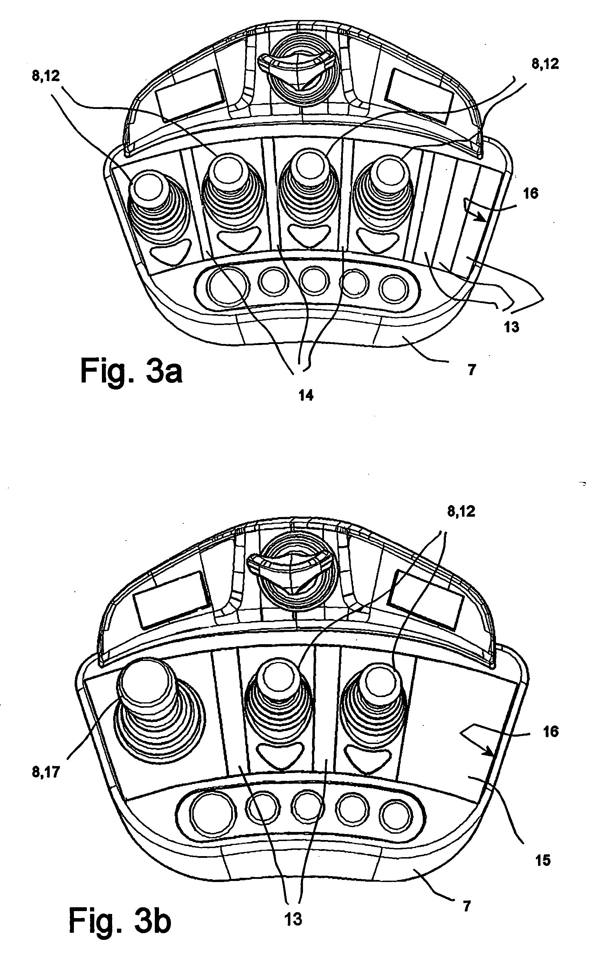

Die Fig. 3a zeigt ein erstes Beispiel einer zu einem erfindungsgemäßen System gehörigen Bedienvorrichtung an dem Armlehnenkopf 7. In einer sich bogenförmig quer über den Armlehnenkopf 7 erstreckenden Aufnahmeöffnung 16 sind Bedienelemente 8 hier in Form von vier gleichen in einer Achse betätigbaren Joysticks 12 angeordnet. Zwischen den Bedienelementen 8 sind schmale Abstandselemente 14 angeordnet. Der verbleibende seitliche Freiraum der Aufnahmeöffnung 16 ist mit Abstandselementen 13 mittlerer Breite, wie sie auch in der Fig. 2 dargestellt sind, abgedeckt.

Die Fig. 3b zeigt ein weiteres Ausführungsbeispiel einer Bedienvorrichtung, die zu dem erfindungsgemäßen System gehört. In der Aufnahmeöffnung 16 des Armlehnenkopfs 7 sind hier insgesamt drei Bedienelemente 8 angeordnet, wobei zwei Bedienelemente 8 in Form von Joysticks 12 denjenigen der Fig. 3a entsprechen. Ein drittes Bedienelement 8 weist jedoch eine größere Breite auf und ist eine weitere Ausführungsform eines Joysticks 17, der beispielsweise in zwei zueinander senkrechten Achsen betätigbar ist. Zwischen den Bedienelementen 8 sind mittelbreite Abstandselemente 13 angeordnet. Der verbleibende seitliche Freiraum der Aufnahmeöffnung 16 ist im vorliegenden Fall mit einem breiten Abstandselement 15 abgedeckt.

Vorteilhaft weisen die Bedienvorrichtungen der Fig. 3a und der Fig. 3b jeweils zwei gleiche Bedienelemente 8 auf. Dadurch ist zum einen eine kostengünstige Herstellung der Bedienvorrichtungen, die unterschiedlichen Flurförderzeugen zugeordnet sind, möglich. Zum anderen wird auch ermöglicht, dass diese Joysticks 12, wenn sie denselben Funktionen der jeweiligen Flurförderzeuge zugeordnet sind, einen leichten Umstieg von dem einen Flurförderzeug zum anderen Flurförderzeug ermöglichen, da die Bedienung zumindest zum Teil schon bekannt ist. Gleichzeitig ermöglicht die freie Auswahl aus einer Mehrzahl von Bedienelementen 8 im vorliegenden Fall bei der Fig. 3b eine Anpassung dahingehend, dass ein abweichender Joystick 17 vorgesehen wird. Alternativ kann dieser abweichende Joystick 17 entsprechend zum Beispiel Kundenwünschen oder Erfordernissen bestimmten Märkte die Funktionen der zwei weiteren Joysticks 12 der Fig. 3a, die in der Fig. 3b nicht vorhanden sind, in einem Bedienelement 8 vereinigen. Der Joystick 17 in Fig. 3b kann zum Beispiel zwei Funktionen in zwei Ebenen bedienen für die in Fig. 3a zwei Joysticks 12 mit Betätigung jeweils in einer Ebene vorgesehen sind. Das erfindungsgemäße System ermöglicht daher eine sehr flexible, schnelle und kostengünstige Anpassung von Bedienvorrichtungen an spezielle Wünsche bzw. unterschiedliche Flurförderzeuge.

## Patentansprüche

1. Bedienvorrichtung für ein Flurförderzeug mit einer Mehrzahl an einer Bedienkonsole (6), insbesondere einer Armlehne, angeordneten Bedienelementen (8), die auf einer Fläche (F) angeordnet sind,
**dadurch gekennzeichnet,**
**dass** die Bedienelemente (8) auf einer konvexen oder annähernd zumindest zylinderförmig nach oben gewölbten Fläche (F) angeordnet sind, wobei die Fläche (F) mit einem Radius r_{F} von einer unterhalb der Bedienkonsole (6) und in Längserstreckung der Bedienkonsole (6) gelegenen Parallelachse (PA) aus gewölbt ist.

2. Bedienvorrichtung nach Anspruch 1,
**dadurch gekennzeichnet,**
**dass** die Fläche (F) kugelförmig mit einem Radius r_{F} von einem Punkt (W) auf der Parallelachse (PA) gewölbt ist.

3. Bedienvorrichtung nach Anspruch 1 oder 2,
**dadurch gekennzeichnet,**
**dass** die Bedienelemente (8) auf der Fläche (F) in einer Linie (B) mit einem Greifradius r_{G} angeordnet sind, bezogen auf einen Aufliegepunkt (A) eines Ellenbogengelenks eines Bedieners auf der Bedienkonsole (6).

4. Bedienvorrichtung nach einem der Ansprüche 1 bis 3,
**dadurch gekennzeichnet,**
**dass** zumindest eines der Bedienelemente (8) ein um eine oder zwei Achsen verschwenkbarer Bedienhebel, insbesondere ein Joystick (12,17), ist.

5. Bedienvorrichtung nach Anspruch 4,
**dadurch gekennzeichnet,**
**dass** der Bedienhebel ein Doppelbedienhebel ist.

6. Bedienvorrichtung nach einem der Ansprüche 1 bis 5,
**dadurch gekennzeichnet,**
**dass** zumindest eines der Bedienelemente ein Tasten- und/oder Schalterfeld ist.

7. Bedienvorrichtung nach einem der Ansprüche 1 bis 6,
**dadurch gekennzeichnet,**
**dass** zumindest eines der Bedienelemente ein Drehgeber oder Drehrücksteller ist.

8. Bedienvorrichtung nach einem der Ansprüche 1 bis 7,
**dadurch gekennzeichnet,**
**dass** die Bedienkonsole (6) eine Armlehne ist.

9. Bedienvorrichtung nach Anspruch 8,
**dadurch gekennzeichnet,**
**dass** die Fläche (F), auf der die Bedienelemente (8) angeordnet sind, an einem Armlehnenkopf (7) der Armlehne (6) angeordnet ist.

10. Bedienvorrichtung nach einem der Ansprüche 1 bis 9,
**dadurch gekennzeichnet,**
**dass** die Bedienelemente in der Fläche (F) liegende Anschlussränder und/oder Übergangsflächen aufweisen.

11. Bedienvorrichtung nach einem der Ansprüche 1 bis 10,
**dadurch gekennzeichnet,**
**dass** Abstandselemente (13, 14, 15) zwischen und/oder randseitig zu den Bedienelementen angeordnet sind.

12. System aus einer Mehrzahl von Bedienvorrichtungen nach einem der Ansprüche 1 bis 11 für unterschiedliche Flurförderzeuge mit jeweils angepassten Bedienelementen (8),
**dadurch gekennzeichnet,**
**dass** die Bedienelemente (8) einheitliche Befestigungselemente zum Einsetzen in entsprechende Aufnahmeelemente der Bedienvorrichtung aufweisen, und die Bedienvorrichtungen eine linienförmige, insbesondere bogenförmige, Aufnahmeöffnung (16) aufweisen, in die zur Bildung einer an ein bestimmtes Flurförderzeug angepassten Bedienvorrichtung aus der Mehrzahl der Bedienelemente (8) ausgewählte Bedienelemente (8) einsetzbar sind.

13. System nach Anspruch 12,
**dadurch gekennzeichnet,**
**dass** in Zwischenräume zwischen den Bedienelementen (8) und/oder seitliche Freiräume in der Aufnahmeöffnung (16) Abstandselemente (13,14,15) angeordnet werden können.

14. System nach Anspruch 13,
**dadurch gekennzeichnet,**
**dass** die Abstandselemente (13,14,15) unterschiedliche Breiten haben können.

15. System nach Anspruch 13 oder 14,
**dadurch gekennzeichnet,**
**dass** zwischen zwei Bedienelementen (8) jeweils ein Abstandselement (13,14) angeordnet ist.

16. System nach einem der Ansprüche 12 bis 15,
**dadurch gekennzeichnet,**
**dass** die Bedienelemente (8) unterschiedliche Breiten haben können.

17. System nach einem der Ansprüche 12 bis 16,
**dadurch gekennzeichnet,**
**dass** zumindest eines der Bedienelemente ein um eine oder zwei Achsen verschwenkbarer Bedienhebel, insbesondere ein Joystick (12,17) ist.

18. System nach Anspruch 17,
**dadurch gekennzeichnet,**
**dass** der Bedienhebel ein Doppelbedienhebel ist.

19. System nach einem der Ansprüche 12 bis 18,
**dadurch gekennzeichnet,**
**dass** zumindest eines der Bedienelemente ein Tasten- und/oder Schalterfeld ist.

20. System nach einem der Ansprüche 12 bis 19,
**dadurch gekennzeichnet,**
**dass** zumindest eines der Bedienelemente ein Drehgeber oder Drehrücksteller ist.

21. System nach einem der Ansprüche 12 bis 20,
**dadurch gekennzeichnet,**
**dass** die Aufnahmeöffnung auf einer Fläche, insbesondere einer zylinder- oder kugelförmigen Fläche (F), einer Bedienkonsole (6) angeordnet ist.

22. System nach Anspruch 20,
**dadurch gekennzeichnet,**
**dass** die Bedienkonsole (6) eine Armlehne ist und die Fläche (F) an einem Armlehnenkopf (7) der Armlehne (6) angeordnet ist.

23. System nach einem der Ansprüche 12 bis 22,
**dadurch gekennzeichnet,**
**dass** die Bedienvorrichtungen für unterschiedliche Flurförderzeuge eines oder mehrere Bedienelemente (8) gemeinsam haben.

## Claims

1. Operator control device for an industrial truck having a multiplicity of operator control elements (8) which are arranged on an operator control console (6), in particular an armrest and are arranged on a surface (F),
**characterized**
**in that** the operator control elements (8) are arranged on a convex or upwardly curved surface (F) at least approximately in the shape of a cylinder, wherein the surface (F) is curved with a radius r_{F} from a parallel axis (PA) located underneath the operator control console (6) and in the longitudinal extent of the operator console (6).

2. Operator control device according to Claim 1,
**characterized**
**in that** the surface (F) is curved in the shape of a ball with a radius r_{F} from a point (W) on the parallel axis (PA).

3. Operator control device according to Claim 1 or 2,
**characterized**
**in that** the operator control elements (8) are arranged on the surface (F) in a line (B) with a gripping radius r_{G} related to a support point (A) of an elbow joint of an operator on the operator control console (6).

4. The operator control device according to one of Claims 1 to 3,
**characterized**
**in that** at least one of the operator control elements (8) is an operator control lever, in particular a joystick (12, 17), which can be pivoted about one or two axes.

5. Operator control device according to Claim 4,
**characterized**
**in that** the operator control lever is a double operator control lever.

6. Operator control device according to one of Claims 1 to 5,
**characterized**
**in that** at least one of the operator control elements is a pushbutton keypad and/or switch keypad.

7. Operator control device according to one of Claims 1 to 6,
**characterized**
**in that** at least one of the operator control elements is a rotary encoder or rotary reset actuator.

8. Operator control device according to one of Claims 1 to 7,
**characterized**
**in that** the operator control console (6) is an armrest.

9. Operator control device according to Claim 8,
**characterized**
**in that** the surface (F) on which the operator control elements (8) are arranged is arranged on an armrest head (7) of the armrest (6).

10. Operator control device according to one of Claims 1 to 9,
**characterized**
**in that** the operator control elements have connecting edges and/or transmission faces located in the surface (F).

11. Operator control device according to one of Claims 1 to 10,
**characterized**
**in that** spacer elements (13, 14, 15) are arranged between the operator control elements and/or at their edge.

12. System composed of a multiplicity of operator control devices according to one of Claims 1 to 11 for different industrial trucks with respective adapted operator control elements (8),
**characterized**
**in that** the operator control elements (8) have uniform attachment elements for insertion into corresponding receptacle elements on the operator control device, and the operator control devices have a linear, in particular arcuate, receptacle opening (16) into which operator control elements (8) which are selected from the multiplicity of operator control elements (8) can be inserted in order to form an operator control device which is adapted to a specific industrial truck.

13. System according to Claim 12,
**characterized**
**in that** spacer elements (13, 14, 15) can be arranged in intermediate spaces between the operator control elements (8) and/or lateral free spaces in the receptacle opening (16).

14. System according to Claim 13,
**characterized**
**in that** the spacer elements (13, 14, 15) can have different widths.

15. System according to Claim 13 or 14,
**characterized**
**in that** a spacer element (13, 14) is arranged between every two operator control elements (8).

16. System according to one of Claims 12 to 15,
**characterized**
**in that** the operator control elements (8) can have different widths.

17. System according to one of Claims 12 to 16,
**characterized**
**in that** at least one of the operator control elements is an operator control lever, in particular a joystick (12, 17) which can be pivoted about one or two axes.

18. System according to Claim 17,
**characterized**
**in that** the operator control lever is a double operator control lever.

19. System according to one of Claims 12 to 18,
**characterized**
**in that** at least one of the operator control elements is a pushbutton keypad and/or switch keypad.

20. System according to one of Claims 12 to 19,
**characterized**
**in that** at least one of the operator control elements is a rotary encoder or rotary reset actuator.

21. System according to one of Claims 12 to 20,
**characterized**
**in that** the receptacle opening is arranged on the surface, in particular on a surface (F) which is in the shape of cylinder or ball, of an operator control console (6).

22. System according to Claim 20,
**characterized**
**in that** the operator control console (6) is an armrest, and the surface (F) is arranged on an armrest head (7) of the armrest (6).

23. System according to one of Claims 12 to 22,
**characterized**
**in that** the operator control devices have one or more operator control elements (8) in common for different industrial trucks.

## Revendications

1. Dispositif de commande pour un chariot de manutention avec une multiplicité d'éléments de commande (8) disposés sur une console de commande (6) en particulier un accoudoir, qui sont disposés sur une surface (F), **caractérisé en ce que** les éléments de commande (8) sont disposés sur une surface (F) convexe ou courbée vers le haut approximativement au moins cylindrique, dans lequel la surface (F) est courbée avec un rayon r_{F} à partir d'un axe parallèle (PA) situé en dessous de la console de commande (6) suivant l'extension longitudinale de la console de commande (6).

2. Dispositif de commande selon la revendication 1, **caractérisé en ce que** la surface (F) est courbée en forme de sphère avec un rayon r_{F} depuis un point (W) sur l'axe parallèle (PA).

3. Dispositif de commande selon la revendication 1 ou 2, **caractérisé en ce que** les éléments de commande (8) sont disposés sur la surface (F) suivant une ligne (B) présentant un rayon de prise r_{G}, par rapport à un point d'appui (A) d'une articulation du coude d'un opérateur sur la console de commande (6).

4. Dispositif de commande selon l'une quelconque des revendications 1 à 3, **caractérisé en ce qu'**au moins un des éléments de commande (8) est un levier de commande pivotant autour d'un ou de deux axe(s, en particulier un manche à balai (12, 17).

5. Dispositif de commande selon la revendication 4, **caractérisé en ce que** le levier de commande est un levier de commande double.

6. Dispositif de commande selon l'une quelconque des revendications 1 à 5, **caractérisé en ce qu'**au moins un des éléments de commande est un champ de touches et/ou d'interrupteurs.

7. Dispositif de commande selon l'une quelconque des revendications 1 à 6, **caractérisé en ce qu'**au moins un des éléments de commande est un actionneur rotatif ou un organe de remise à zéro rotatif.

8. Dispositif de commande selon l'une quelconque des revendications 1 à 7, **caractérisé en ce que** la console de commande (6) est un accoudoir.

9. Dispositif de commande selon la revendication 8, **caractérisé en ce que** la surface (F), sur laquelle les éléments de commande (8) sont disposés, est disposée sur une tête d'accoudoir (7) de l'accoudoir (6).

10. Dispositif de commande selon l'une quelconque des revendications 1 à 9, **caractérisé en ce que** les éléments de commande présentent des bords de raccordement et/ou des faces de transition situés/situées dans la surface (F).

11. Dispositif de commande selon l'une quelconque des revendications 1 à 10, **caractérisé en ce que** des éléments d'écartement (13, 14, 15) sont disposés entre et/ou en bordure des éléments de commande.

12. Système composé d'une multiplicité de dispositifs de commande selon l'une quelconque des revendications 1 à 11 pour différents chariots de manutention avec des éléments de commande (8) respectivement adaptés, **caractérisé en ce que** les éléments de commande (8) présentent des éléments de fixation uniques à insérer dans des éléments de réception correspondants du dispositif de commande, et les dispositifs de commande présentent une ouverture de réception (16) en forme de ligne, en particulier en forme d'arc, dans laquelle des éléments de commande (8) choisis dans la multiplicité des éléments de commande (8) peuvent être insérés pour la formation d'un dispositif de commande adapté à un chariot de manutention déterminé.

13. Système selon la revendication 12, **caractérisé en ce que** des éléments d'écartement (13, 14, 15) peuvent être disposés dans des intervalles entre les éléments de commande (8) et/ou dans des espaces libres latéraux dans l'ouverture de réception (16).

14. Système selon la revendication 13, **caractérisé en ce que** les éléments d'écartement (13, 14, 15) peuvent avoir des largeurs différentes.

15. Système selon la revendication 13 ou 14, **caractérisé en ce qu'**un élément d'écartement (13, 14) est chaque fois disposé entre deux éléments de commande (8).

16. Système selon l'une quelconque des revendications 12 à 15, **caractérisé en ce que** les éléments de commande (8) peuvent avoir des largeurs différentes.

17. Système selon l'une quelconque des revendications 12 à 16, **caractérisé en ce qu'**au moins un des éléments de commande est un levier de commande pivotant autour d'un ou de deux axe (s), en particulier un manche à balai (12, 17).

18. Système selon la revendication 17, **caractérisé en ce que** le levier de commande est un levier de commande double.

19. Système selon l'une quelconque des revendications 12 à 18, **caractérisé en ce qu'**au moins un des éléments de commande est un champ de touches et/ou d'interrupteurs.

20. Système selon l'une quelconque des revendications 12 à 19, **caractérisé en ce qu'**au moins un des éléments de commande est un actionneur rotatif ou un organe de remise à zéro rotatif.

21. Système selon l'une quelconque des revendications 12 à 20, **caractérisé en ce que** l'ouverture de réception est disposée sur une surface, en particulier une surface cylindrique ou sphérique (F), d'une console de commande (6).

22. Système selon la revendication 20, **caractérisé en ce que** la console de commande (6) est un accoudoir et la surface (F) est disposée sur une tête d'accoudoir (7) de l'accoudoir (6).

23. Système selon l'une quelconque des revendications 12 à 22, **caractérisé en ce que** les dispositifs de commande destinés à différents chariots de manutention peuvent avoir un ou plusieurs éléments de commande (8) en commun.
